(19) Europäisches Patentamt
European Patent Office
Office européen des brevets

(11) **EP 1 244 872 B1**

(12) **EUROPÄISCHE PATENTSCHRIFT**

(45) Veröffentlichungstag und Bekanntmachung des Hinweises auf die Patenterteilung:
**07.06.2006 Patentblatt 2006/23**

(21) Anmeldenummer: **00985197.3**

(22) Anmeldetag: **19.12.2000**

(51) Int Cl.:
**F03D 1/06** (2006.01)

(86) Internationale Anmeldenummer:
**PCT/EP2000/012939**

(87) Internationale Veröffentlichungsnummer:
**WO 2001/048377 (05.07.2001 Gazette 2001/27)**

(54) **ROTORBLATT FÜR EINE WINDENERGIEANLAGE**

ROTOR BLADE FOR A WIND POWER INSTALLATION

PALE DE ROTOR POUR EOLIENNE

(84) Benannte Vertragsstaaten:
**AT BE CH CY DE DK ES FI FR GB GR IE IT LI LU MC NL PT SE TR**

(30) Priorität: **24.12.1999 DE 19963086**

(43) Veröffentlichungstag der Anmeldung:
**02.10.2002 Patentblatt 2002/40**

(73) Patentinhaber: **Wobben, Aloys**
**26607 Aurich (DE)**

(72) Erfinder: **Wobben, Aloys**
**26607 Aurich (DE)**

(74) Vertreter: **Göken, Klaus G.**
**Eisenführ, Speiser & Partner**
**Patentanwälte Rechtsanwälte**
**Postfach 10 60 78**
**28060 Bremen (DE)**

(56) Entgegenhaltungen:
**EP-A- 0 675 285          DE-C- 819 078**
**US-A- 1 802 094          US-A- 2 236 494**
**US-A- 4 150 301          US-A- 4 329 117**
**US-A- 4 495 423**

**Beschreibung**

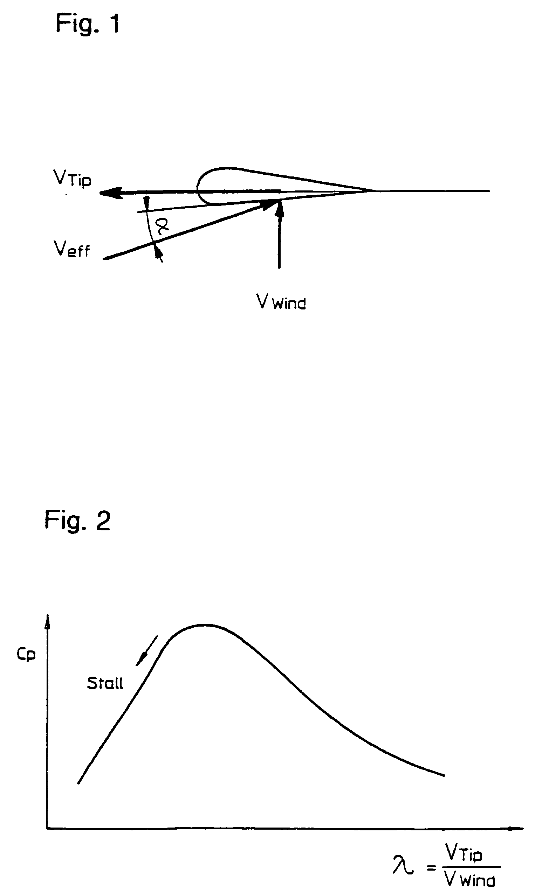

Die Erfindung betrifft ein Rotorblatt für eine Windenergieanlage. Der Wirkungsgrad von Rotorblättern wird durch den Anströmwinkel, also den Winkel zwischen der Rotorblattprofilsehne und Anströmrichtung der Luft, bestimmt. Insbesondere bei Windenergieanlagen hängt der Anströmwinkel von der Rotorblattgeschwindigkeit - also der Rotordrehzahl - und der Windgeschwindigkeit ab: Die Anströmrichtung ist durch den Summenvektor aus der Windgeschwindigkeit $v_{Wind}$ und der Geschwindigkeit der Rotorblattspitze $v_{Tip}$, der effektiven Anströmgeschwindigkeit $V_{eff}$ ausgezeichnet, siehe Fig. 1,

$$V_{eff} = \sqrt{V_{Wind}^2 + V_{Tip}^2} \qquad (1)$$

Ändert sich die Windgeschwindigkeit, so ändert sich bei gleichbleibender Rotordrehzahl und gleichbleibendem Anstellwinkel des Rotorblattes auch der Anströmwinkel. Dies bewirkt eine Änderung der Auftriebskraft, die auf das Rotorblatt wirkt und somit letztlich eine Veränderung des Wirkungsgrads des Rotors. Bei einem Anströmwinkel von 0°, somit also bei verhältnismäßig kleiner Windgeschwindigkeit, ist der Auftrieb sehr klein. Im Bereich kleiner Anströmwinkel steigt der Wirkungsgrad dann zunächst langsam mit der Windgeschwindigkeit bis zu einem maximalen Wirkungsgrad an. Steigt die Windgeschwindigkeit noch weiter, vergrößert sich der Anströmwinkel bis zu einem Wert, von dem ab die Strömung auf der Rotorblattsaugseite, der windabgewandten Seite des Rotorblattes, abreißt. DerWirkungsgrad fällt von da an mit steigender Windgeschwindigkeit steil ab. Man spricht hier von dem sogenannten Stall-Bereich.

Zur Veranschaulichung dieses Zusammenhangs wird in Fig. 2 der Leistungsbeiwert $c_P$ eines Rotorblattes als Funktion der Schnelllaufzahl $\lambda$,

$$\lambda = v_{Tip} / v_{Wind} \qquad (2)$$

dargestellt. Die Schnelllaufzahl wird nach Gleichung 2 aus dem Verhältnis aus Rotorblattgeschwindigkeit an der Blattspitze $v_{Tip}$ zur vorherrschenden Windgeschwindigkeit $v_{Wind}$ gebildet und ist daher in erster Näherung, das heißt bei kleinerem Anströmwinkel, umgekehrt proportional zu dem Anströmwinkel. Der Leistungsbeiwert $c_P$ ist proportional zu dem Wirkungsgrad des Rotorblattes.

Fig. 2 verdeutlicht, daß mit sinkender Schnelllaufzahl der Leistungsbeiwert $c_P$ zunächst ansteigt und nach Überschreiten des Maximums steil abfällt. Weiterhin, dies ist in Fig. 2 nicht gezeigt, hängt der Leistungsbeiwert auch noch von dem Anstellwinkel des Rotorblattes ab, da sich mit dem Anstellwinkel auch der Anströmwinkel ändert. Man würde für eine optimale Leistungsausbeute einen Anstellwinkel des Rotorblattes wählen, so daß die Windenergieanlage bei gegebener Rotorblatt- und Windgeschwindigkeit auf dem Maximum der $c_P$-Kurve arbeitet.

In den meisten Gegenden ist jedoch nicht mit einer konstanten Windgeschwindigkeit zu rechnen. Wechselnde Winde bedeuten bei konstanter Rotordrehzahl eine Veränderung der Schnelllaufzahl. Da während des Betriebs einer Windenergieanlage aber auch bei wechselnden Winden ein möglichst hoher Leistungsbeiwert erreicht werden soll, wird bislang nach dem Prinzip der variablen Drehzahl die Rotordrehzahl der Windenergieanlage linear nach der Windgeschwindigkeit geregelt, so dass die Schnelllaufzahl nach Möglichkeit konstant bleibt und das Rotorblatt immer nahe des maximalen Leistungsbeiwertes betrieben wird. An Standorten mit geringen Turbulenzen funktioniert dieses Konzept sehr gut.

Bei stark böigem Wind aber ist eine Nachführung der Rotordrehzahl nicht in entsprechender Geschwindigkeit und/oder Genauigkeit möglich: Bei schnellen und starken Schwankungen der Windgeschwindigkeit um einen Mittelwert kann die Drehzahl des Rotors oft nicht sofort und unmittelbar folgen. Dadurch wird insbesondere bei einem schnellen Anstieg der Windgeschwindigkeit der Anströmwinkel kurzzeitig zu groß. In diesem Moment reißt die Strömung auf der Saugseite des Rotorblattes ab, wodurch es folglich keinen oder bestenfalls nur noch einen stark verminderten Auftrieb erfährt. Damit sinkt unmittelbar auch das auf den Rotor ausgeübte Drehmoment, was dazu führt, daß die Drehzahl zusätzlich fällt. Dieser Effekt ist selbstverstärkend, da nun wiederum der Anströmwinkel noch größer ist, usw.

Ein ähnliches Problem ergibt sich an Standorten mit lokal kleinen Turbulenzen. Ändert sich die Windgeschwindigkeit beispielsweise nur auf der rechten Rotorkreisfläche, bricht die Strömung an dem Rotorblatt ab, das sich in diesem Augenblick in der Region dieser Turbulenz befindet. In einer solchen Situation kann eine variable Drehzahl ebenfalls keine Abhilfe schaffen.

Aus DE 198 15 519 ist ein Rotorblatt für eine nach dem Passiv-Stall- oder Aktiv-Stall-Prinzip arbeitende Windkraftanlage bekannt, wobei das Rotorblatt eine besondere Profilvorderkante aufweist.

Aus DE 44 28 731 ist ein längenvariables Rotorblatt für Windkraftanlagen bekannt, welches zumindest in einem Teilbereich als Teleskop mit einem starren Teleskopteil und einem beweglichen Teleskopteil ausgeführt ist.

Aus DE 44 28 730 ist ein metallisches Rotorblatt für Windkraftanlagen bekannt, welches aus einem über die gesamte Länge des Rotorblattes reichenden und sich zur Blattspitze hin verjüngenden tragenden Hohlprofil ausgebildet ist, das aus zwei Stegblechen und zwei gewölbten Flanschblechen zusammengesetzt ist, wobei die - Flanschbleche zugleich die gewünschte Oberflächenkontur des Rotorblattes im Bereich des Hohlprofils bilden.

Aus DE 31 26 677 ist ein Rotorblatt für schnellaufende Rotoren bekannt. Hierbei ist der Blattspitzenbereich als getrenntes Rotorblatteil ausgebildet und mit dem Rotorblatt so über eine Drehachse verbunden, dass das Rotorblattteil durch Windkräfte verstellbar ist.

Schließlich ist aus EP 0 675 285 ein Rotorblattflügel für Windenergieanlagen bekannt, wobei das Rotorblatt mit einer verschiedenen Anzahl von Folien belegt ist, um eine maximal mögliche Rauhigkeit zu gewährleisten.

Aus US-A 4,150,301 ist eine Windturbine bekannt, welche über einen Rotor verfügt, weicher einen inneren Bereich aufweist, der seheibenartig ausgebildet ist und an dem sich nach außen hin drei einzelne Blätter anschließen. Durch Ausbildung verschiedener Laufzahlen für den inneren und den äußeren Bereich lässt sich eine Kompromisskennlinie für die Laufzahlen erreichen. Schließlich ist aus US-A 1,802,094 ein Rotor mit einem Rotorblatt bekannt.

Femer offenbart US-A 4,329,117 eine Windturbine mit einem Zweiblattrotar.

Um im Betrieb einer Windenergieanlage bei böigem Wind möglichst nicht in den Statt-Bereich zu gelangen, wird die Rotordrehzahl in der Regel so reguliert, dass die Windenergieanlage - eine mittlere Windgeschwindigkeit zu Grunde legend - bei einer Schnelllaufzahl betrieben wird, die etwas oberhalb der zum Maximalwert des Leistungsbeiwertes gehörigen Schnelllaufzahl (vgl. Fig. 2) liegt, Dadurch nimmt bei plötzlich, jedoch nicht zu stark auffrischendem Wind der Leistungsbeiwert sogar zunächst zu. Bei starker und plötzlicher Windzunahme wird das Wirkungsgradmaximum jedoch nach wie vor überschritten und die Strömung beginnt abzureißen. Das Prgbiem ist damit also noch nicht befriedigend gelöst. Als weiterer Nachteil erweist sich, dass die Leistungsausbeute aufgrund der gewählten Rotationsgeschwindigkeit nicht maximal ist.

Der Erfindung liegt daher die Aufgabe zu Grunde, die Empfindlichkeit eines Rotorblattes gegen turbulente Windströmungen zu verringern.

Die Aufgabe wird durch ein Rotorblatt mit den Merkmalen des Anspruchs 1 gelöst. Vorteilhafte Weiterbildungen sind in den Unteransprüchen beschrieben.

Betrachtet man den Prozess des Strömungsabrisses genauer, dann stellt man fest, dass dieser bei den bekannten Rotorblättem immer im zentrumsnahen Bereich nahe der Rotorblattwurzel beginnend, sich nach außen zur Rotorblattspitze fortpflanzend von statten geht. Es ist daher einerseits zweckmäßig, den Strömungsabriss insbesondere im zentrumsnahen Bereich des Rotorblanes zu vermeiden. Das wird erfindungsgemäß dadurch erreicht, dass das Rotorblatt in seiner Längsrichtung in wenigstens zwei einstückig miteinander verbundene Abschnitte unterteilt ist, die für unterschiedliche Schneiiaufzahien ausgelegt sind, wobei die dem maximalen Leistungsbeiwert zugehörige Schnelllaufzahl des von der Rotorblattwurzel weiter entfernten Abschnittes größer ist als die dem maximalen Leistungsbeiwert zugehörige Schneillaufzahl des jeweils näher zur Rotarblatiwurzel gelegenen Abschnittes.

Das äußere Ende des Roborülattes ist aufgrund des größeren Drehmoments durch dort angreifende Kräfte und des stabilitätsbedingten Prvfilverlaufs eines Rotorblat tes für die Energieerzeugung maßgeblich. Daher ist es weiterhin zweckmäßig, sofern sich ein Strömungsabriss nicht vollständig vermeiden lässt, diesen auf den inneren, nahe der Rotorblattwurzel befindlichen Bereich zu beschränken. Das wird bevorzugt dadurch erreicht, daß der Übergang zwischen den jeweils benachbarten Abschnitten verhältnismäßig kurz im Vergleich zur Länge der Abschnitte ist, so daß ein innen beginnender Strömungsabriß an dem Übergang gestoppt wird und sich dadurch nicht über die gesamte Länge des Rotorblattes und damit insbesondere nicht bis zur Rotorblattspitze ausbreiten kann.

Dazu wird vorzugsweise ein Übergang mit 1 % bis 30% der Länge eines der einzelnen Abschnitte gewählt. Der Zwischenwinkel beider Abschnitte kann in einer vorteilhaften Ausführung zwischen 5 ° und 20 ° betragen. Dadurch werden je nach den Windverhältnissen einerseits günstige Anströmwinkel sowohl am inneren Rotorblattabschnitt als auch am äusseren Rotorblattabschnitt erzielt. Andererseits ist der Übergang ausreichend abrupt, um das Fortpflanzen eines dennoch einsetzenden Strömungsabrisses zu verhindern.

Es erweist sich weiterhin als vorteilhaft das Rotorblatt in einen längeren inneren und einen kürzeren äußeren Abschnitt zu unterteilen, um den Strömungsabriss weitestgehend zu vermeiden und gleichzeitig den Wirkungsgrad des Rotorblattes nicht unnötig zu vermindern.

Die Erfindung ist nachstehend anhand der Zeichnungen beispielsweise erläutert. In den Zeichnungen zeigen:

Fig. 1     ein Rotorblatt im Profilschnitt;

Fig. 2     den Rotorblatt-Leistungsbeiwert $c_p$ in Abhängigkeit von der Schnelllaufzahl $\lambda$;

Fig. 3     die Beispielausführung eines zweigeteilten, einstückigen Rotorblattes, dessen beide Abschnitte für unterschiedliche Schnelllaufzahlen ausgelegt sind;

Fig. 4    die Leistungsbeiwertkurven $c_p$ zweier Rotorblattabschnitte eines Rotorblattes in Abhängigkeit von der Schnelllaufzahl $\lambda$.

Fig. 5    die dreidimensionale Ansicht eines Rotorblattes mit zwei unterschiedlichen Rotorblattabschnitten;

Fig. 6    die Strak-Ansicht: überlagerte Profilschnitte eines Rotorblattes von der Rotorblattwurzel bis zur Rotorblattspitze.

Der Profilschnitt des Rotorblattes im Bereich des äusseren Rotorblattabschnittes aus Fig. 1 verdeutlicht den Zusammenhang zwischen der Rotorblattgeschwindigkeit an der Rotorblattspitze $v_{Tip}$, der Windgeschwindigkeit $v_{Wind}$ und dem daraus resultierenden Anströmwinkel $\alpha$. Nach Gleichung 1 setzt sich die effektive Anströmgeschwindigkeit $v_{eff}$ additiv aus der Komponente der Windgeschwindigkeit und der dazu senkrechten Rotorblattgeschwindigkeit zusammen. Bei wachsender Windgeschwindigkeit nimmt deren Komponente zu und der Anströmwinkel $\alpha$ wird größer.

Demgegenüber nimmt die Schnelllaufzahl $\lambda$ mit wachsender Windgeschwindigkeit ab. Nach Fig. 2 bewegt man sich dabei auf der Leistungsbeiwertkurve von rechts nach links, überschreitet an einer Stelle das Maximum des Leistungsbeiwertes und gelangt bei weiter sinkender Schnelllaufzahl in den Stall-Bereich, in dem der Leistungsbeiwert stark abfällt.

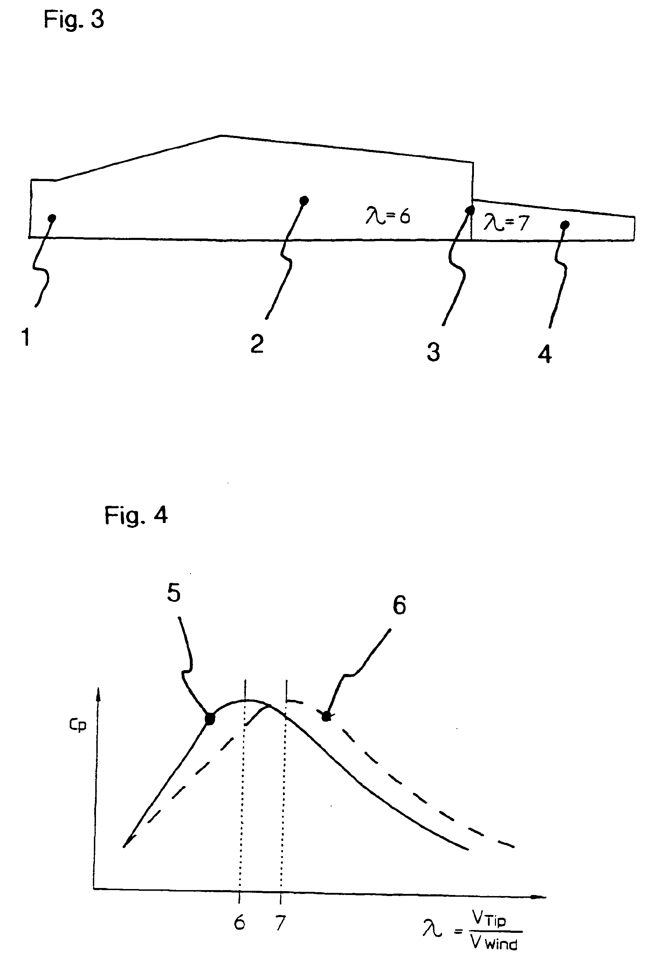

Das Rotorblatt gemäß der Ausführungsform aus Fig. 3 besteht aus einer Rotorblattwurzel 1 und zwei Rotorblattabschnitten 2 und 4, deren Übergang 3 gemessen an der Länge der Rotorblattabschnitte 2 und 4 kurz und nur durch eine Trennlinie schematisch dargestellt ist. Der größere Abschnitt 2 besitzt einen kleineren Anstellwinkel zwischen der Profilsehne des Rotorblattabschnitts und der Windrichtung, wodurch das Leistungsbeiwertmaximum dieses Abschnittes bei einer kleineren Schnelllaufzahl $\lambda(=6)$ liegt. Dieser Abschnitt ist also für eine geringere Schnelllaufzahl ausgelegt. Damit wird dem geringeren Bahnumfang, den der innere Bereich während einer Umdrehung zurückzulegen hat, Rechnung getragen. Der kleinere Rotorblattabschnitt 4 mit einem größeren Anstellwinkel zwischen der Profilsehne des Rotorblattabschnitts und der Windrichtung erreicht dagegen sein Leistungsbeiwertmaximum bei einer größeren Schnelllaufzahl $\lambda(= 7)$.

Der Verlauf beider Leistungsbeiwerte $c_p$ in Abhängigkeit von der Schnelllaufzahl $\lambda$ ist in Fig. 4 für den Rotorblattabschnitt 2 aus Fig. 3 als durchgezogene Linie 5 und für den Rotorblattabschnitt 4 aus Fig. 3 als gestrichelte Linie 6 gekennzeichnet.

Im normalen Betrieb (bei $\lambda$ = 7) wird mithin der äußere (Tip)-Bereich des Rotorblatts im Optimum betrieben, da dies auch relevant für den Gesamtertrag der Windenergieanlage ist. Der innere Bereich ($\lambda$ = 6) liegt links vom Optimum, so dass Böen nicht dazu führen, dass das gesamte Blatt in den Stallbereich geführt wird. Tritt nun eine starke Böe (positive Böe) auf, beginnt möglicherweise der äußere Bereich ($\lambda$ = 7), in den Stallbereich überzugehen (Stallen), während dann der innere Bereich ($\lambda$ = 6) im Optimum betrieben wird. Daraus resultiert, dass ein Stall, wenn überhaupt, immer nur in einem kleinen Bereich des gesamten Rotorblatts auftreten kann, so dass sich quasi eine "verbreiterte" Kennlinie (Fig. 4) ergibt. Dies lässt sich auch wie folgt erklären:

Nimmt die Windgeschwindigkeit zu und somit die Schnelllaufzahl ab, dann gelangt man im Fall eines kleineren Anstellwinkels, wie ihn der innere Rotorblattabschnitt aufweist, erst verhältnismäßig spät, das heißt erst bei kleinerer Schnelllaufzahl $\lambda$ = 6 in den Stallbereich, verglichen mit einem Anstellwinkel, wie ihn der äussere Bereich $\lambda$ = 7 aufweist. In der Summe bedeutet dies, dass die Rotordrehzahl nicht so schnell abnimmt, sondern einen stabilen Betriebspunkt erreicht. Durch die Teilung wird also eine scheinbar verbreiterte Leistungsbeiwert-Kennlinie in Abhängigkeit von der Schnelllaufzahl erreicht.

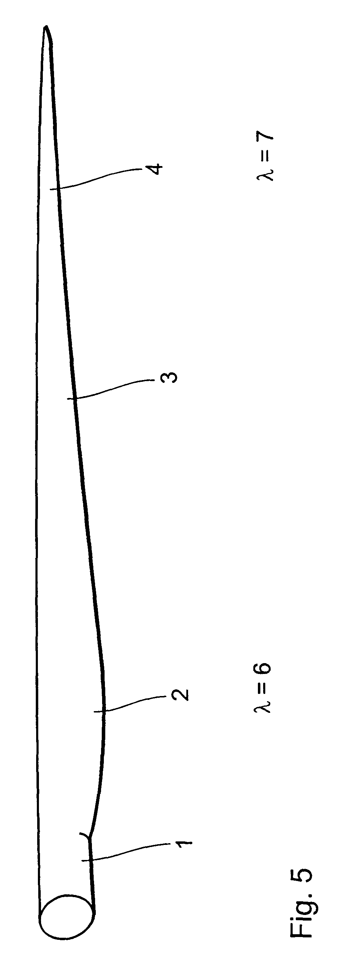

Das Rotorblatt aus Fig. 5 stellt eine andere Ausführungsform dar, bei der der Übergangsbereich 3 zwischen den beiden durch die Pfeile gekennzeichneten Rotorblattabschnitten 2 und 4 vergleichsweise groß ist, also einen homogeneren Verlauf als in der Ausführungform aus Fig. 3 hat und dadurch nicht markant in Erscheinung tritt. Der vordere Abschnitt mit dem runden Profil 1 ist die Rotorblattwurzel.

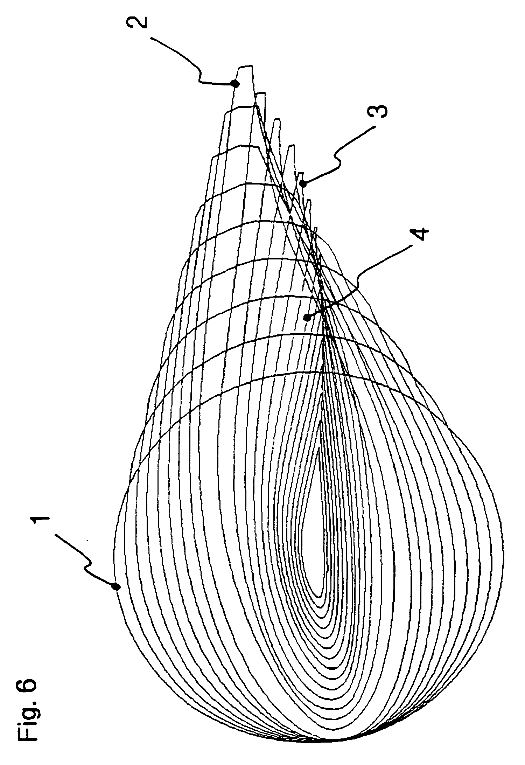

Die überlagerten Profilschnitte aus Fig. 6 geben den Profilverlauf eines Rotorblattes in verschiedenen Abschnitten wieder. Beginnend bei der Rotorblattwurzel 1 ist das Profil rund, nimmt dann zur Spitze hin fortschreitend im inneren Rotorblattabschnitt 2 tropfenform an und weist zunächst mit der Schmalseite leicht nach oben. Weiter in Richtung Rotorblattspitze fortschreitend kippt das Profil mit im Übergangsbereich 3 mit der Schmalseite nach unten, bis die Profilsehne in der Horizontalen liegt, wodurch der Anstellwinkel vergrößert wird. An dieser Stelle beginnt der äußere Rotorblattabschnitt 4, der bis zur Spitze fortschreitend durch den horizontalen Profilsehnenverlauf und einen kleiner werdenden Querschnitt gekennzeichnet ist. Die Abbildung gibt den homogeneren Übergang der Ausführungs wie aus Fig. 5 wieder, der sich über einen vergleichsweise größeren Abschnitt der Rotorblattes erstreckt.

**Patentansprüche**

1. Rotorblatt für eine Windenergieanlage, welches in seiner Längsrichtung in wenigstens zwei Abschnitte unterteilt ist, die einstückig miteinander verbunden sind und die für unterschiedliche Schnellaufzahlen ausgelegt sind **dadurch gekennzeichnet**, daβ, die dem maximalen Leistungsbeiwert zugehörige Schnelllaufzahl des von der Rotorblattwurzel weiter entfernten Abschnittes größer ist als die dem maximalen Leistungsbeiwert zugehörige Schnelllaufzahl des jeweils näher zur Rotorblattwurzel gelegenen Abschnittes.

2. Rotorblatt nach Anspruch 1,
**dadurch gekennzeichnet, daß** der Übergang zwischen den jeweils benachbarten Abschnitten verhältnismäßig kurz im Vergleich zur Länge der Abschnitte ist.

3. Rotorblatt nach Anspruch 2,
**dadurch gekennzeichnet, daß** die Länge des Übergangs etwa 1 % - 30% der Länge eines einzelnen Abschnittes beträgt.

4. Rotorblatt nach einem der Ansprüche 1 bis 3,
**dadurch gekennzeichnet, daß** die Profilsehnen benachbarter Rotorblattabschnitte einen Zwischenwinkel aufweisen, der im Bereich zwischen 5° und 20° liegt.

5. Rotorblatt nach einem der Ansprüche 1 bis 4,
**dadurch gekennzeichnet, daß** es in einen längeren inneren und einen kürzeren äußeren Abschnitt unterteilt ist.

6. Rotorblatt nach einem der Ansprüche 1 bis 5,
**dadurch gekennzeichnet, daß** es als Ganzes um seine Längsachse drehbar gelagert ist.

7. Rotorblatt nach Anspruch 6,
**dadurch gekennzeichnet, daß** es mit einer aktiven Pitch-Regelung angesteuert wird.

**Claims**

1. A rotor blade for a wind power installation, which is divided in its longitudinal direction into at least two portions which are integrally joined to each other and which are designed for different tip speed ratios,
**characterised in that** the tip speed ratio, associated with the maximum power coefficient, of the portion that is further from the root of the blade is greater than the tip speed ratio, associated with the maximum power coefficient, of the respective portion that is closer to the root of the blade.

2. A rotor blade according to claim 1,
**characterised in that** the transition between the respectively adjacent portions is comparatively short in comparison with the length of the portions.

3. A rotor blade according to claim 2,
**characterised in that** the length of the transition is approximately 1% - 30% of the length of an individual portion.

4. A rotor blade according to any one of claims 1 to 3,
**characterised in that** the section chords of adjacent rotor blade portions have an angle between them which is in the range from 5° to 20°.

5. A rotor blade according to any one of claims 1 to 4,
**characterised in that** it is divided into a longer, inner portion and a shorter, outer portion.

6. A rotor blade according to any one of claims 1 to 5,
**characterised in that** it is mounted to be rotatable in its entirety about its longitudinal axis.

7. A rotor blade according to claim 6,
**characterised in that** it is controlled by active automatic pitch control.

**Revendications**

1.  Pale de rotor pour éolienne, laquelle est divisée dans sa direction longitudinale en au moins deux sections qui sont reliées l'une à l'autre d'un seul tenant et qui sont dimensionnées pour différentes vitesses spécifiques de roue, **caractérisée en ce que** la vitesse spécifique de roue de la section très distante du pied de la pale de rotor, associée au coefficient de puissance maximal de l'éolienne, est supérieure à la vitesse spécifique de roue, associée au coefficient de puissance maximal de l'éolienne, de la section respectivement plus proche du pied de la pale de rotor.

2.  Pale de rotor selon la revendication 1,
    **caractérisée en ce que** le passage entre les sections respectivement voisines est relativement court en comparaison de la longueur des sections.

3.  Pale de rotor selon la revendication 2,
    **caractérisée en ce que** la longueur du passage mesure approximativement 1 % à 30 % de la longueur d'une section individuelle.

4.  Pale de rotor selon l'une quelconque des revendications 1 à 3,
    **caractérisée en ce que** les cordes du profil de sections de pale de rotor voisines présentent un angle intermédiaire qui est compris entre 5° et 20°.

5.  Pale de rotor selon l'une quelconque des revendications 1 à 4,
    **caractérisée en ce qu'**elle est divisée en une section interne plus longue et une section externe plus courte.

6.  Pale de rotor selon l'une quelconque des revendications 1 à 5,
    **caractérisée en ce qu'**elle est montée dans l'ensemble de manière à pouvoir tourner autour de son axe longitudinal.

7.  Pale de rotor selon la revendication 6,
    **caractérisée en ce qu'**elle est commandée par une régulation active du pas.

## Fig. 1

$V_{Tip}$

$V_{eff}$

$\alpha$

$V_{wind}$

## Fig. 2

$c_p$

Stall

$$\lambda = \frac{V_{Tip}}{V_{wind}}$$

Fig. 3

$\lambda = 6$   $\lambda = 7$

1    2    3    4

Fig. 4

5    6

$C_p$

6    7

$\lambda = \dfrac{V_{Tip}}{V_{wind}}$

$\lambda = 6$

$\lambda = 7$

Fig. 5

EP 1 244 872 B1

Fig. 6